(19) Europäisches Patentamt
European Patent Office
Office européen des brevets

(11) **EP 4 311 092 A1**

(12) **EUROPEAN PATENT APPLICATION**

(43) Date of publication:
**24.01.2024 Bulletin 2024/04**

(21) Application number: **23186430.7**

(22) Date of filing: **19.07.2023**

(51) International Patent Classification (IPC):
**H02M 1/44** (2007.01)    **H02M 3/335** (2006.01)

(52) Cooperative Patent Classification (CPC):
**H02M 3/33523; H02M 1/44; H02M 3/33592;**
**H02M 1/344**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **21.07.2022  US 202263391099 P**
**02.05.2023  US 202318142485**

(71) Applicant: **Power Integrations, Inc.**
**San Jose, CA 95138 (US)**

(72) Inventors:
- **Balakrishnan, Vikram**
  **San Francisco, 94105 (US)**
- **Quek, Eng Hwee**
  **Singapore 762701 (SG)**

(74) Representative: **Fish & Richardson P.C.**
**Highlight Business Towers**
**Mies-van-der-Rohe-Straße 8**
**80807 München (DE)**

(54) **SELECTIVE DAMPING OF RINGING IN A POWER CONVERTER**

(57) A power converter includes a damping circuit coupled to the dissipative element for dissipating energy corresponding to a resonant ringing produced by a magnetic inductance of the energy transfer element and by the switch capacitance when the power converter is in discontinuous conduction mode.

FIG. 2A

**Description**

CROSS-REFERENCE TO RELATED APPLICATIONS

This application claims the benefit of U.S. Provisional Application No. 63/391,099, filed July 21, 2022 which is incorporated by reference in its entirety.

**BACKGROUND OF THE INVENTION**

Field of the Invention

The present invention relates generally to controlling a power converter, and more specifically to resonant ringing during the discontinuous mode. Even more specifically, the present invention relates to damping the resonant ringing.

Discussion of the Related Art

The flyback converter is a popular circuit topology for power supplies in low-power and medium-power applications. Flyback converters are used to power a wide range of electronic devices, including cell phones, tablet computers, laptop computers, DVD players and set-top boxes. The flyback converter is a switchedmode power supply that has two distinct operating modes: discontinuous conduction mode (DCM) and continuous conduction mode (CCM). In DCM, the energy transfer element, typically a coupled inductor, has its stored energy reduced to zero during each switching period. A coupled inductor is an inductor that has at least two windings. Typically, in a flyback converter one winding is an input (primary) winding and the other is an output (secondary) winding. In CCM, energy from current in the windings is stored in the energy transfer element during the entirety of each switching period.

In DCM, there is a dead time where neither the primary nor secondary winding is conducting current that contributes to power conversion. During the dead time, there is typically a decaying oscillation, sometimes called a resonant ringing, of the voltages across the windings of the coupled inductor. The resonant ring is created by interaction between the magnetizing inductance of the coupled inductor and the parasitic capacitance at the primary switch node. This DCM ring is typically 400 kHz to 1.2 MHz and in the middle of the frequency band where such signals are considered undesirable noise and are restricted by regulatory agencies. The electrical noise that is generated by the converter may be conducted on the input power lines to another device via physical circuitry or parasitic capacitance. Therefore, the magnitude of the DCM ring must be managed.

BRIEF DESCRIPTION OF THE DRAWINGS

Non-limiting and non-exhaustive embodiments of the present invention are described with reference to the following figures, wherein like reference numerals refer to like parts throughout the various views unless otherwise specified.

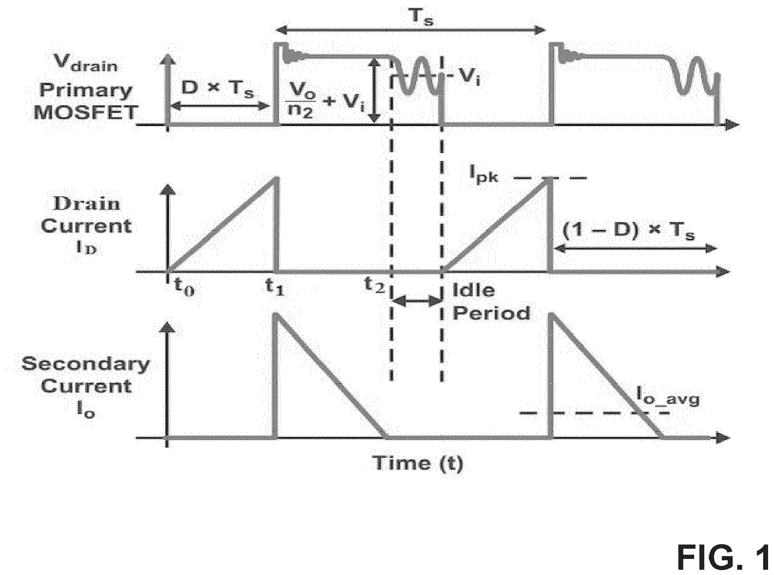

FIG. 1 illustrates current through each winding of the energy transfer element in a flyback converter during discontinuous conduction mode (DCM) as in the prior art.

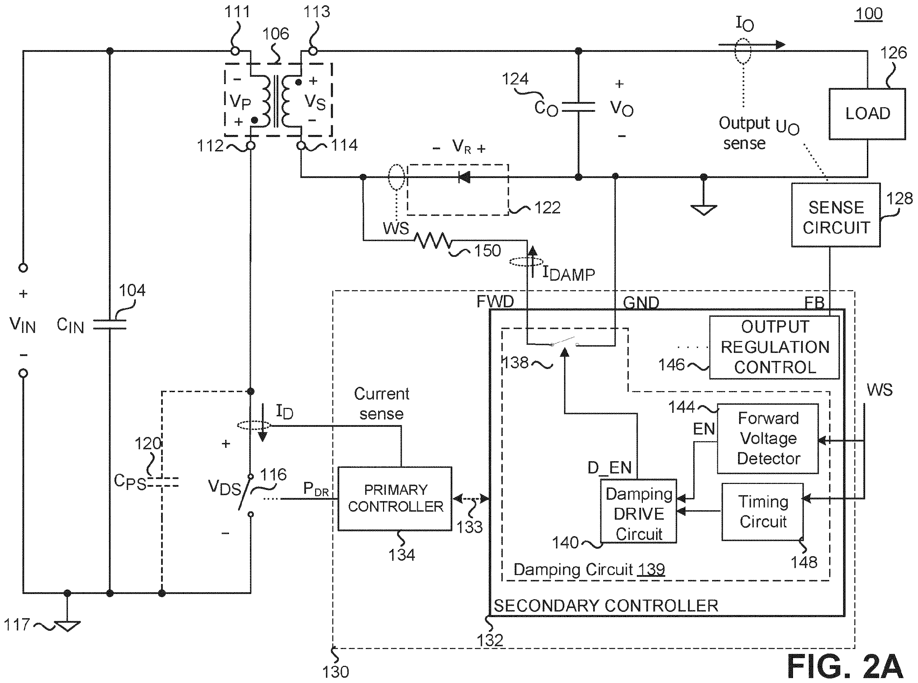

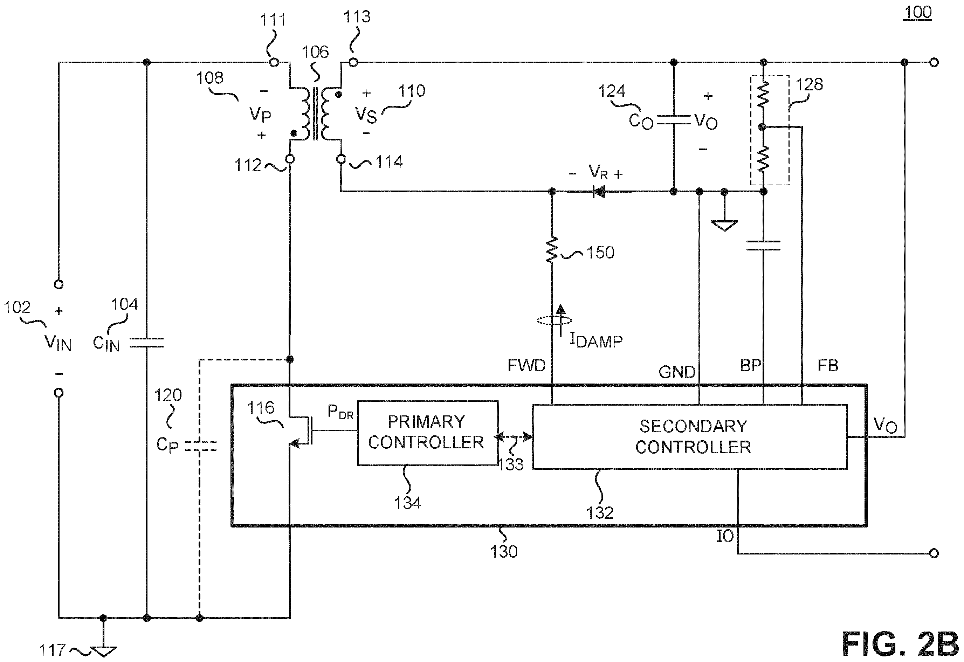

FIG. 2A illustrates an example functional block diagram of a power converter in a flyback configuration that uses a selectively activated circuit to damp ringing in accordance with teachings of the present invention. In the illustrative example, a diode acts as a passive secondary switch. FIG. 2B illustrates a circuit schematic of the power converter in a flyback configuration shown in FIG. 2A with an integrated circuit that includes a power switch with control circuits.

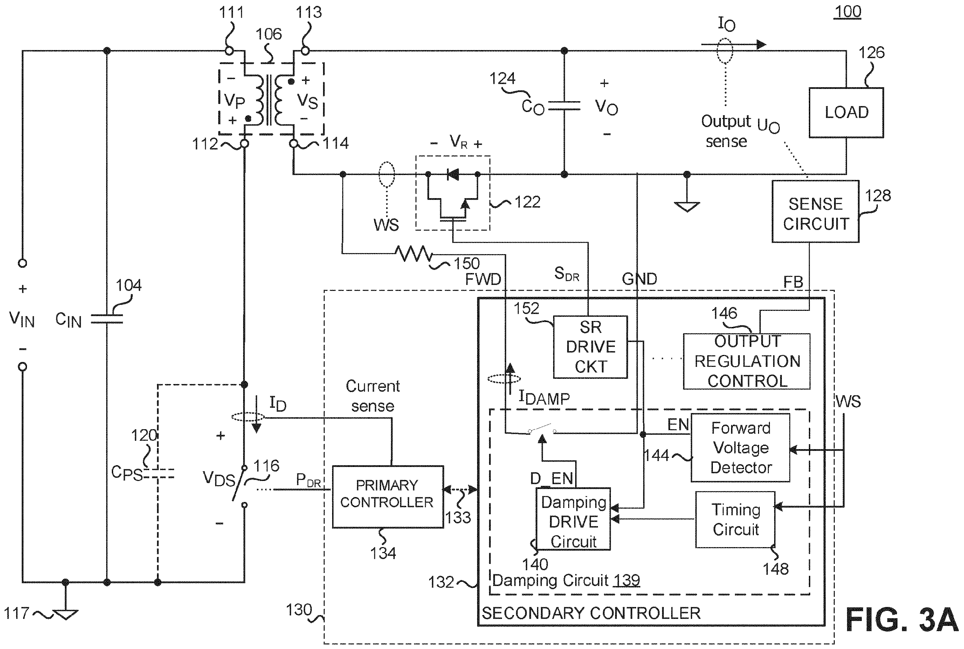

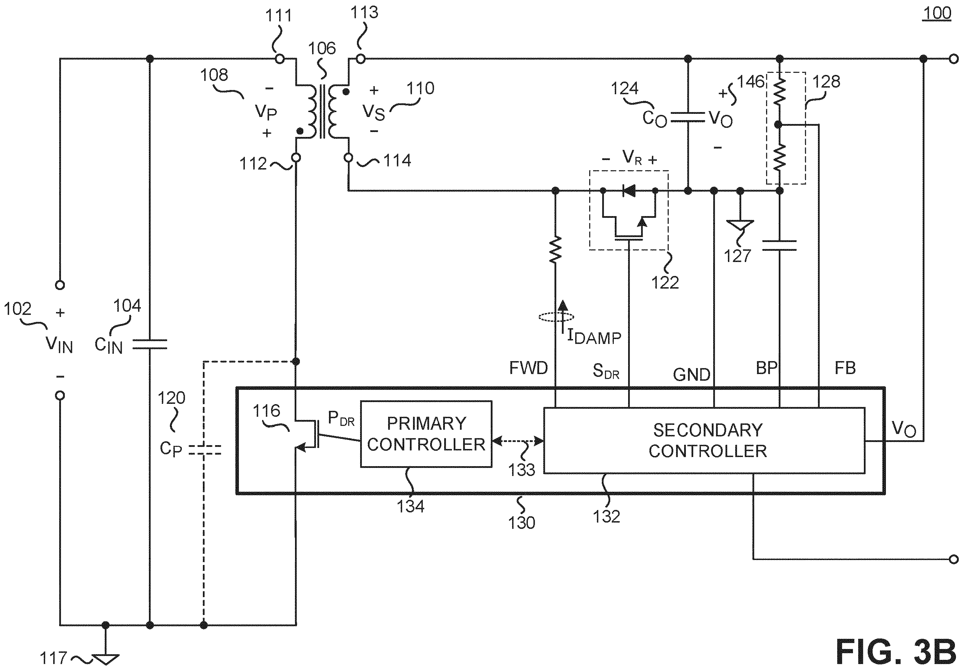

FIG. 3A illustrates an example functional block diagram of a power converter in a flyback configuration that uses a selectively activated circuit to damp ringing in accordance with teachings of the present invention. In the illustrative example, a synchronous rectifier acts as an active secondary switch. FIG. 3B illustrates a circuit schematic of the power converter in the flyback configuration shown in FIG. 3A with an integrated circuit that includes a power switch with control circuits.

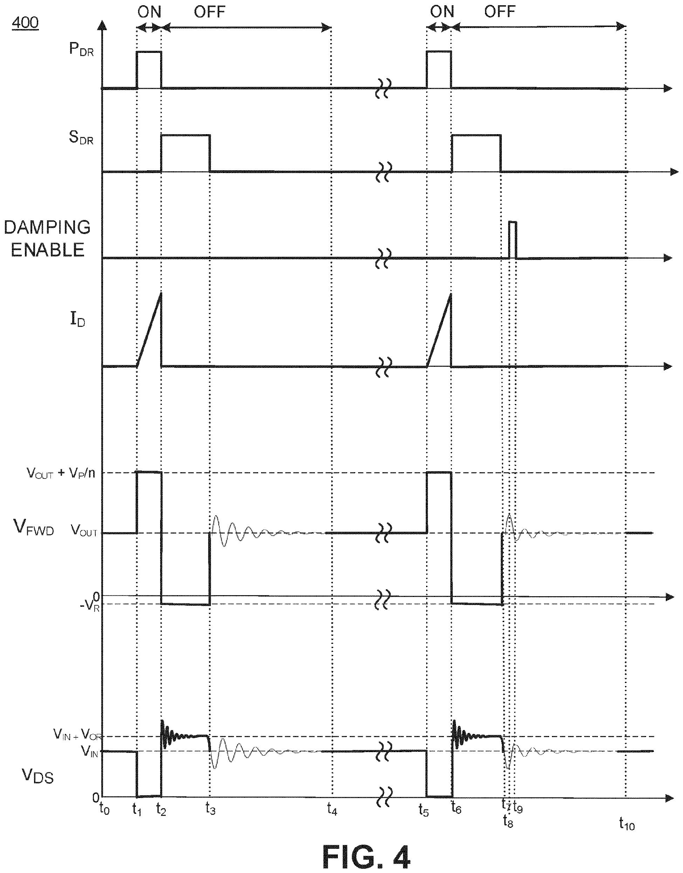

FIG. 4 shows an example timing diagram that illustrates example waveforms of a primary drive signal, secondary drive signal, damping enable signal, a switch current, and a switch voltage found in an example power converter. The time interval $t_0$ to $t_4$ illustrates discontinuous conduction mode (DCM) operation without damping. The time interval $t_5$ to tie illustrates discontinuous conduction mode (CCM) operation with damping.

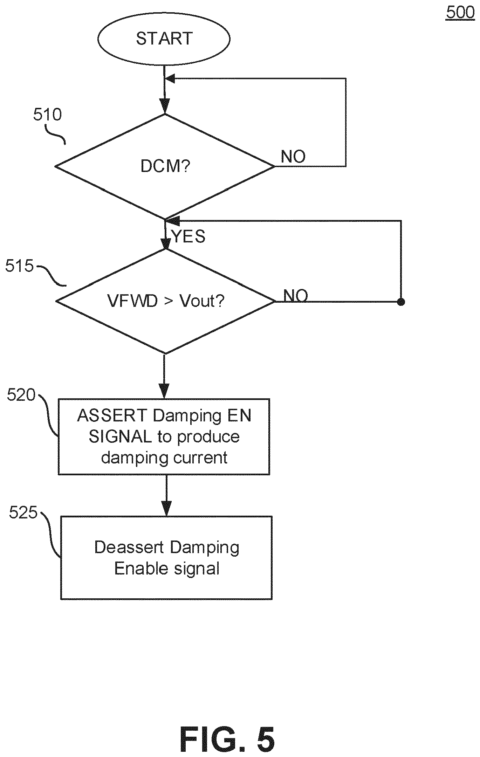

FIG. 5 illustrates a flow diagram of one example decision process of the damping circuit in accordance with teachings of the present invention.

Corresponding reference characters indicate corresponding components throughout the several views of the drawings. Skilled artisans will appreciate that elements in the figures are illustrated for simplicity and clarity and have not necessarily been drawn to scale. For example, the dimensions of some of the elements in the figures may be exaggerated relative to other elements to help to improve understanding of various embodiments of the present invention. Also, common but well-understood elements that are useful or necessary in a commercially feasible embodiment are often not depicted to facilitate a less obstructed view of these various embodiments of the present invention.

DETAILED DESCRIPTION

In the following description, numerous specific details are set forth in order to provide a thorough understanding of the present invention. It will be apparent, however, to one having ordinary skill in the art that the specific detail need not be employed to practice the present invention. In other instances, well-known materials or methods have not been described in detail in order to avoid obscuring the present invention.

Reference throughout this specification to "one embodiment", "an embodiment", "one example" or "an example" means that a particular feature, structure or characteristic described in connection with the embodiment or example is included in at least one embodiment of the present invention. Thus, appearances of the phrases "in one embodiment", "in an embodiment", "one example" or "an example" in various places throughout this specification are not necessarily all referring to the same embodiment or example. Furthermore, the particular features, structures or characteristics may be combined in any suitable combinations and/or subcombinations in one or more embodiments or examples. Particular features, structures or characteristics may be included in an integrated circuit, an electronic circuit, a combinational logic circuit, or other suitable components that provide the described functionality. In addition, it is appreciated that the figures provided herewith are for explanation purposes to persons ordinarily skilled in the art and that the drawings are not necessarily drawn to scale.

For illustrative purposes, it is noted that the below description discusses a power converter may be used to provide output voltage and current to for the purposes of providing energy to a battery powered product. It is appreciated however that the present invention may be applied in general to any power converter.

In various examples described here, the teachings are directed towards reducing conducted EMI by reducing the energy in a resonant circuit of a switched mode power supply after a resonant ring has been detected, e.g. after the current in the secondary winding reduces to zero and the secondary switch has been turned OFF. The resonant circuit is formed by the inductance of a coupled inductor and the effective capacitance at the ends of its windings. The dominant capacitance is typically associated with the node connected to the primary switch. This primary switch capacitance Crs 120 may include the natural capacitance that is internal to the coupled inductor 106, as well as the natural internal capacitance of the power switch 116. The capacitance Crs 120 may also represent discrete capacitors placed intentionally in various parts of the circuit to filter noise and to slow transitions of switching voltages.

FIG. 1 illustrates current through each winding of the energy transfer element in a flyback converter during discontinuous conduction mode (DCM) of the prior art.

During the time interval from $t_0$ to $t_1$, on the primary side of the converter the primary switch is on and conducts a drain current $I_D$ with constant slope from the input voltage source through the primary winding to ground. The drain current $I_D$ ramps up until a desired current level is reached, at which point the primary controller turns off the primary switch. As the drain current $I_D$ increases, energy gets stored in the coupled inductor. On the secondary side of the converter during this interval, the voltage that appears across the secondary winding puts the secondary switch in a non-conducting state.

During the time interval $t_1$ to $t_2$, the primary switch is turned off and the energy stored in the coupled inductor is delivered by current in the secondary winding places the secondary switch in a conducting state. The secondary current decays linearly. With DCM, this time interval of operation is sufficiently long to let the secondary current decay to zero.

In DCM, there is an "idle period" or deadtime where both the primary and secondary currents are zero because the output does not require more energy. After this idle period, the switch turns on again to trigger a new cycle of power conversion. During this idle period, a resonant ring occurs by the interaction between the magnetizing inductance of the coupled inductor and energy stored on the parasitic capacitance at the primary switch node.

A power converter in DCM can have a deadtime long enough for the resonant ring to decay completely, e.g. VDS will be comparable to Vin. The resonant ring during the deadtime may be in the conducted EMI band e.g. 400kHz to 1.2MHz, where the allowable magnitude is restricted. The high frequency ringing adds to the drain to source voltage source $V_{DS}$, e.g. voltage across the primary switch).

During the time interval $t_0$ to $t_1$, the primary switch is conducting and the voltage across the primary switch $V_{DS}$ is substantially zero. During the time interval $t_1$ to $t_2$, when the diode or (or synchronous rectifier) at the secondary side conducts, the voltage across the primary winding is approximately the input voltage ($V_{IN}$) plus the output voltage Vo reflected to the primary winding:

$$V_P = nV_S$$

and

$$V_S \approx V_O$$

n is the number of primary turns divided by the number of secondary turns. However, as shown above, there is ringing on the drain voltage of the primary switch before it settles to the following:

$$V_{IN} + nV_O$$

The inductance of the coupled inductor with the parasitic capacitance of the drain lead to high-frequency oscillations at the primary and the secondary winding after the secondary switch turns off. In the present teachings, damping the resonant ringing just after turning OFF the secondary switch dissipates the energy in the ring.

FIG. 2A illustrates an example functional block diagram of a power converter in a flyback configuration that uses a damping switch and a damping drive circuit for reducing the magnitude and duration of the ringing voltage in accordance with teachings of the present invention. FIG. 2B illustrates a circuit schematic of the power converter in the flyback configuration shown in FIG. 2A with an integrated circuit that includes a power switch with control circuits. In the illustrative example, the power converter 100 in a flyback configuration that uses a diode as a secondary switch.

The power converter 100 may be used to provide energy to an electronic device, e.g. a battery powered product. The effective primary switch capacitance Crs 120, which is illustrated in dashed lines, represents all the capacitance that is coupled across the power switch 116. The primary switch capacitance Crs 120 may include the natural capacitance that is internal to the energy transfer element, e.g. coupled inductor 106, as well as the natural internal capacitance of the power switch 116. The primary switch capacitance Crs 120 may also represent discrete capacitors placed intentionally in various parts of the circuit to filter noise and to slow transitions of switching voltages.

The power converter 100 also includes a primary controller 134 and a secondary controller 132. The primary controller 134 controls the switching of the primary switch 116, whereas the secondary controller 132 controls the switching of the damping switch 138 and a dissipative element 150, e.g. a resistor. The primary controller 134 and secondary controller 132 may communicate via a galvanically isolated communication link 133.

While schematically represented as a switch, the damping switch 138 is a conductivity modulated device such as a metal-oxide semiconductor field effect transistor (MOSFET). The damping switch 138 is coupled to selectively conduct damping current between the forward voltage node 114 and a lower potential node, e.g. reference ground.

The energy transfer element 106 includes a primary winding 106A and a secondary winding 106B. The voltage across the primary winding $+V_P$ goes from node 112 to node 111. The voltage across the secondary winding $+Vs$ goes from the output voltage node 113 to the forward voltage node 114.

The primary controller 134 and secondary controller 132 may be formed as part of an integrated circuit that is manufactured as either a hybrid or monolithic integrated circuit, as shown as controller 130. In one example, the primary switch 116 may also be integrated in a single integrated circuit package with controller 130. In another example, the damping switch 138 may be integrated in a single integrated circuit package with controller 130. It should be appreciated that both the primary controller and the secondary controller need not be included in a single controller package and may be implemented in separate controller packages. Further, the primary controller 134 and the secondary controller 132 may be formed as separate integrated circuits.

The secondary controller 132 includes a selectively activated Damping Circuit 139 and an Output Regulation Control 146. The Output Regulation Control 146 is used to manage the functionality of the flyback converter.

The selected activated damping circuit 139 includes a damping drive circuit 140, a Forward Voltage Detector circuit 144, and a Timing Circuit 148. The Forward Voltage Detector circuit 144 receives the winding sense WS and identifies the initial resonant ringing of the secondary side and in response enables the damping drive circuit 140. In one example, the enable signal EN is a digital signal where a rising edge in the enable signal EN corresponds to enabling the damping switch 138 to turn ON.

When enabled, the damping drive circuit 140 and damping switch 138 produce a damping current $I_{DAMP}$ that is used to dissipate energy in the dissipative element 150 just after the secondary switch 122 has been turned OFF and resonant ringing begins.

The Timing Circuit 146 determines the duration for which the damping drive circuit 140 is turned ON to damp the resonant ringing. These times are a function of either the value of the output current $I_O$, the input voltage $V_{IN}$, or the length of time between the ON section of the primary drive signal $P_{DR}$ and the second ON section of the secondary drive signal $S_{DR}$ that follows. These parameters may be extrapolated from the winding sense WS. As an example, the input voltage $V_{IN}$ may be sensed using the voltage across the secondary winding (*e.g.*, FWD pin in FIG. 2A). As the input voltage $V_{IN}$ increases, the duration that the damping drive circuit 140 is enabled may also increase and vice versa.

FIG. 3A illustrates an example of a power converter in a flyback configuration that uses a damping switch and a damping drive circuit to damp ringing of a resonant circuit in accordance with teachings of the present invention. FIG. 3B illustrates a circuit schematic the power converter in a flyback configuration shown in FIG. 3A with an integrated circuit that includes a power switch with control circuits.

In the illustrative example, the power converter 100 in a flyback configuration that uses a synchronous rectifier (SR) 122 as a secondary switch for output rectification.

The power converter 100 also includes a primary controller 134 and a secondary controller 132. The primary controller 134 controls the switching of the primary switch 116, whereas the secondary controller 132 controls a secondary switch 122 and the switching of the damping switch 138 and a dissipative element 150, e.g. a resistor. The primary controller 134 and secondary controller 132 may communicate via a galvanically isolated communication link 133. The secondary switch 122 may be exemplified as a synchronous rectifier 122. The primary controller 134 and secondary controller 132 may communicate via a galvanically isolated communication link 133. The primary controller 134 and secondary controller 132 may be manufactured as described above.

The secondary controller 132 includes a selectively activated Damping Circuit 139 and an Output Regulation Control 146. The Output Regulation Control 146 is used to manage the functionality of the flyback converter.

In the illustrative example, the secondary controller includes a SR drive circuit 152 which controls the secondary switch 122. The SR drive circuit 152 may produce the drive signal $S_{DR}$ in response to the enable signal EN. The drive signal $S_{DR}$ may control the turn ON and turn OFF transitions of the synchronous rectifier 122. The drive signal SR is a digital waveform with varying lengths of logic high and logic low sections. When the drive signal $S_{DR}$ is logic high, the secondary switch 122 is turned ON or conducting. Illustratively, the secondary switch 122 is controlled to turn ON after the primary switch 116 is turned OFF such that energy stored in the energy transfer element, e.g. coupled inductor 106 while the primary switch 116 is ON is transferred to the output of the power converter 100 (for example, transferred to the output capacitor Co 124 and the load 126). In this example, the current in the secondary winding 110 is in the direction to enter forward voltage node 114 to leave output voltage node 113.

FIG. 4 shows an example timing diagram 400 that illustrates the signal behavior of example waveforms of a primary drive signal $P_{DR}$, secondary drive signal $S_{DR}$, the enable signal, the primary switch current $I_D$, the forward voltage, and the primary switch voltage $V_{DS}$ found in an example power converter without damping and with damping. The time interval $t_0$ to $t_4$ illustrates discontinuous conduction mode (DCM) operation without damping. The time interval $t_5$ to $t_{10}$ illustrates discontinuous conduction mode (DCM) operation with damping.

During the time interval $t_1$ to $t_2$, the primary drive signal $P_{DR}$ places the primary switch in conducting mode. The voltage across the primary switch $V_{DS}$ is negligible. The secondary switch 122 is not conducting and the forward voltage is $V_{OUT} + V_P/n$ where $V_P/n$ is the voltage across primary winding divided by the turns ratio n of the windings on the coupled inductor. The turns ratio is defined as the number of primary winding turns to the number of secondary winding turns.

During the time interval $t_2$ to $t_3$, when the synchronous rectifier at the secondary side conducts (indicated by the secondary drive signal $S_{DR}$), the voltage across the primary winding Vr is the input voltage ($V_i$) plus the output voltage Vo reflected to the primary side. The forward voltage is comparable to the voltage drop across the synchronous rectifier.

During the time interval $t_3$ to $t_4$, neither the primary drive signal $P_{DR}$ nor the secondary drive signal $S_{DR}$ are asserted. The power converter is in discontinuous conduction mode. There is resonant ringing across the drain voltage $V_{DS}$. The resonant ringing is transferred to the forward voltage node.

The time interval $t_5$ to tie exemplifies DCM operation with damping.

During the time interval $t_5$ to $t_6$, the primary drive signal $P_{DR}$ places the primary switch in conducting mode. The secondary switch is not conducting and the voltage across the primary switch $V_{DS}$ is negligible.

During the time interval $t_6$ to $t_7$, when or synchronous rectifier at the secondary side conducts (indicated by the secondary drive signal $S_{DR}$), the voltage across the primary switch $V_{DS}$ is the input voltage ($V_{IN}$) plus the output voltage reflected $V_{OR}$ to the primary, and there is ringing across the primary switch. The voltage across the primary winding is the output voltage Vo reflected to the primary side.

During the time interval $t_7$ to $t_8$, just after the secondary switch has been turned OFF, the resonant circuit begins to ring.

During the time interval $t_8$ to $t_9$, the Forward Voltage Detector sends EN to the damping drive circuit when a condition that indicates the start of ringing on the primary switch is detected. In an embodiment, the condition is when $V_{FWD}$ is greater than Vo. The damping drive circuit sends a damping enable D_EN signal to the damping switch that produces the damping current $I_{DAMP}$. The duration of the asserted EN signal is determined by the timing circuit and the forward voltage detector circuit.

During the time interval $t_9$ to $t_{10}$, when the EN signal is deasserted, the capacitance in the resonant circuit on the primary switch is discharged, thereby reducing subsequent ringing as shown on the forward voltage node.

FIG. 5 is a flowchart 500 showing the functionality of the Damping Circuit 139. In step 510, it is determined if the power converter is in DCM? If yes, in step 515, it is determined when if $V_{FWD}$ is greater than $V_{OUT}$. If yes, in step 520, the damping enable D_EN signal is asserted and the damping switch is conducting. The coupled inductor begins to store energy. In step 525, the damping enable D_EN signal is deasserted and the damping switch is placed in a non-conducting state. The capacitance in the resonant circuit on the primary switch is discharged, thereby reducing subsequent resonant ringing.

The above description of illustrated examples of the present invention, including what is described in the Abstract, are not intended to be exhaustive or to be limitation to the precise forms disclosed. While specific embodiments of, and examples for, the invention are described herein for illustrative purposes, various equivalent modifications are possible without departing from the broader spirit and scope of the present invention. Indeed, it is appreciated that the specific example voltages, currents, frequencies, power range values, times, etc., are provided for explanation purposes and that other values may also be employed in other embodiments and examples in accordance with the teachings of the present invention.

Although the present invention is defined in the claims, it should be understood that the present invention can alternatively be defined in accordance with the following examples:

Example 1. A power converter comprising an energy transfer element, having a primary winding and a secondary winding, a forward voltage node and an output voltage node; a primary switch having a non-conductive state and a switch capacitance, coupled to the primary winding and coupled to reference ground; a dissipative element coupled to the forward voltage node; and a secondary controller, coupled to the secondary winding, comprising: a secondary switch having a non-conductive state, and a damping circuit coupled to the dissipative element to selectively produce a damping current in response to the primary and the secondary switches being in the non-conductive state, wherein the dissipative element receives the damping current and in response dissipates energy corresponding to a resonant ringing produced by a magnetic inductance of the energy transfer element and by the switch capacitance.

Example 2. The power converter of example 1, the damping circuit further coupled to selectively produce the damping current in response to the primary and the secondary switches being in the non-conductive state, and the voltage at the forward voltage node being greater than the voltage at the output voltage node.

Example 3. The power converter of example 2, the damping circuit comprising: a forward voltage detector circuit coupled to the energy transfer element to produce an enable signal when the voltage at the forward voltage node is larger than the voltage at the output voltage node; a timing circuit; a damping drive circuit, coupled to the forward voltage detector circuit and to the timing circuit to produce a damping enable signal; and a damping switch coupled to receive the damping enable signal.

Example 4. The power converter of example 1 wherein the damping circuit is coupled to the dissipative element.

Example 5. The power converter of example 1 wherein the damping circuit is coupled between a negative terminal of the secondary winding and reference ground.

Example 6. The power converter of example 1, wherein the damping circuit is coupled between a negative terminal of the secondary winding and a bypass terminal of the switched mode power supply.

Example 7. A method for damping a ring in an energy transfer element comprising: detecting a discontinuous conduction mode of a power converter having an energy transfer element; comparing a voltage on a secondary winding of the energy transfer element and an output voltage of the energy transfer element; producing a damping current; and dissipating energy in the ring.

Example 8. The method of example 7, the step of producing a damping current further comprising producing a damping current in response to the voltage on the secondary winding of the coupled inductor being greater than the output voltage of the energy transfer element.

Further embodiments:
Although the present invention is defined in the attached claims, it should be understood that the present invention can also (alternatively) be defined in accordance with the following embodiments:

1. A power converter comprising:

an energy transfer element, having a primary winding and a secondary winding, a forward voltage node and an output voltage node;
a primary switch having a non-conductive state and a switch capacitance, coupled to the primary winding and coupled to reference ground;
a dissipative element coupled to the forward voltage node; and
a secondary controller, coupled to the secondary winding, comprising:

a secondary switch having a non-conductive state, and
a damping circuit coupled to the dissipative element to selectively produce a damping current in response to the primary and the secondary switches being in the non-conductive state,

wherein the dissipative element receives the damping current and in response dissipates energy corresponding to a resonant ringing produced by a magnetic inductance of the energy transfer element and by the switch capacitance.

2. The power converter of embodiment 1, the damping circuit further coupled to selectively produce the damping current in response to the primary and the secondary switches being in the non-conductive state, and the voltage at the forward voltage node being greater than the voltage at the output voltage node.

3. The power converter of embodiment 2, the damping circuit comprising:

a forward voltage detector circuit coupled to the energy transfer element to produce an enable signal when the voltage at the forward voltage node is larger than the voltage at the output voltage node;
a timing circuit;
a damping drive circuit, coupled to the forward voltage detector circuit and to the timing circuit to produce a damping enable signal; and
a damping switch coupled to receive the damping enable signal.

4. The power converter of embodiment 1 wherein the damping circuit is coupled to the dissipative element.

5. The power converter of embodiment 1 wherein the damping circuit is coupled between a negative terminal of the secondary winding and reference ground.

6. The power converter of embodiment 1, wherein the damping circuit is coupled between a negative terminal of the secondary winding and a bypass terminal of the switched mode power supply.

7. A method for damping a ring in an energy transfer element comprising:

detecting a discontinuous conduction mode of a power converter having an energy transfer element;
comparing a voltage on a secondary winding of the energy transfer element and an output voltage of the energy transfer element;
producing a damping current; and
dissipating energy in the ring.

8. The method of embodiment 7, the step of producing a damping current further comprising producing a damping current in response to the voltage on the secondary winding of the coupled inductor being greater than the output voltage of the energy transfer element.

9. A power converter comprising:

an energy transfer element, having a primary winding and a secondary winding, a forward voltage node and an output voltage node;
a primary switch having a non-conductive state and a switch capacitance, coupled to the primary winding and coupled to reference ground;
a dissipative element coupled to the forward voltage node; and
a secondary controller, coupled to the secondary winding, comprising,

a secondary switch having a non-conductive state, and
a damping circuit coupled to the dissipative element, configured to selectively produce a damping current in response to the primary and the secondary switches being in the non-conductive state and the voltage at the forward voltage node being greater than the voltage at the output voltage node,

wherein the dissipative element receives the damping current and in response dissipates energy corresponding to a resonant ringing produced by a magnetic inductance of the energy transfer element and by the switch capacitance.

10. The power converter of embodiment 9, the damping circuit comprising:

a forward voltage detector circuit coupled to the energy transfer element and configured to produce an enable signal when the voltage at the forward voltage node is larger than the voltage at the output voltage node;
a timing circuit;
a damping drive circuit, coupled to the forward voltage detector circuit and to the timing circuit to produce a damping enable signal; and
a damping switch coupled to receive the damping enable signal.

11. The power converter of embodiment 9, wherein the damping circuit is coupled to the dissipative element.

12. A method for damping a ring in an energy transfer element comprising:

detecting a discontinuous conduction mode of a power converter having an energy transfer element;
comparing a voltage on a secondary winding of the energy transfer element and an output voltage of the energy transfer element;
producing a damping current when the voltage on the secondary winding of the coupled inductor is greater than the output voltage of the energy transfer element; and
dissipating energy in the ring.

**Claims**

1. A power converter comprising:

an energy transfer element, having a primary winding and a secondary winding, a forward voltage node and an output voltage node;
a primary switch having a non-conductive state and a switch capacitance, coupled to the primary winding and coupled to reference ground;
a dissipative element coupled to the forward voltage node; and
a secondary controller, coupled to the secondary winding, comprising:

a secondary switch having a non-conductive state, and
a damping circuit coupled to the dissipative element to selectively produce a damping current in response to the primary and the secondary switches being in the non-conductive state,

wherein the dissipative element receives the damping current and in response dissipates energy corresponding to a resonant ringing produced by a magnetic inductance of the energy transfer element and by the switch capacitance.

2. The power converter of claim 1, the damping circuit further coupled to selectively produce the damping current in response to the primary and the secondary switches being in the non-conductive state, and the voltage at the forward voltage node being greater than the voltage at the output voltage node.

3. The power converter of claim 2, the damping circuit comprising:

a forward voltage detector circuit coupled to the energy transfer element to produce an enable signal when the voltage at the forward voltage node is larger than the voltage at the output voltage node;
a timing circuit;
a damping drive circuit, coupled to the forward voltage detector circuit and to the timing circuit to produce a damping enable signal; and
a damping switch coupled to receive the damping enable signal.

4. The power converter of claim 1 wherein the damping circuit is coupled to the dissipative element.

5. The power converter of claim 1 wherein the damping circuit is coupled between a negative terminal of the secondary winding and reference ground.

6. The power converter of claim 1, wherein the damping circuit is coupled between a negative terminal of the secondary winding and a bypass terminal of the switched mode power supply.

7. A method for damping a ring in an energy transfer element comprising:

detecting a discontinuous conduction mode of a power converter having an energy transfer element;

comparing a voltage on a secondary winding of the energy transfer element and an output voltage of the energy transfer element;
producing a damping current; and
dissipating energy in the ring.

8. The method of claim 7, the step of producing a damping current further comprising producing a damping current in response to the voltage on the secondary winding of the coupled inductor being greater than the output voltage of the energy transfer element.

FIG. 1

100

LOAD 126

SENSE CIRCUIT 128

Output $U_O$ sense

$I_O$

$V_O$ + −

$C_O$ 124

122

$V_R$ − +

WS 150

$I_{DAMP}$

113

+ $V_S$ − 114

106

111 − $V_P$ + 112

104 $C_{IN}$

$V_{IN}$ + −

$I_D$

$V_{DS}$ + − 116

$C_{PS}$ 120

117

Current sense

PRIMARY CONTROLLER 134

$P_{DR}$

133

130

132

SECONDARY CONTROLLER

FB

GND

FWD

138

OUTPUT REGULATION CONTROL 146

WS

Forward Voltage Detector 144

EN

Timing Circuit 148

Damping DRIVE Circuit 140

D_EN

Damping Circuit 139

**FIG. 2A**

FIG. 2B

EP 4 311 092 A1

FIG. 3A

FIG. 3B

EP 4 311 092 A1

13

**FIG. 4**

500

START

510

DCM? — NO

YES

515

VFWD > Vout? — NO

520

ASSERT Damping EN
SIGNAL to produce
damping current

525

Deassert Damping
Enable signal

# FIG. 5

**EP 4 311 092 A1**

Europäisches
Patentamt

European
Patent Office

Office européen
des brevets

# EUROPEAN SEARCH REPORT

Application Number

EP 23 18 6430

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 177 740 B1 (YAU YEU-TORNG [TW] ET AL) 16 November 2021 (2021-11-16) <br> * figures 1-3, 4A * <br> * column 6, line 45 - column 6, line 58 * <br> * column 7, line 1 - column 7, line 36 * <br> * column 7, line 58 - column 7, line 62 * <br> * column 8, line 10 - column 8, line 15 * <br> * column 9, line 32 - column 9, line 35 * <br> * column 9, line 54 - column 9, line 58 * <br> ----- | 1-8 | INV. <br> H02M1/44 <br> H02M3/335 |
| X | EP 2 717 449 B1 (NXP BV [NL]) 14 December 2016 (2016-12-14) <br> * paragraph [0073] - paragraph [0075] * <br> * paragraph [0118] * <br> * figures 2, 3a, 4, 5 * <br> ----- | 1-8 | |
| X | US 2011/228569 A1 (ZHENG JUN [CN] ET AL) 22 September 2011 (2011-09-22) <br> * paragraph [0016] * <br> * paragraph [0034] * <br> * paragraph [0040] * <br> * figures 2B, 2D * <br> * paragraph [0043] * <br> ----- | 1-8 | |

TECHNICAL FIELDS
SEARCHED      (IPC)

H02M

The present search report has been drawn up for all claims

| Place of search | Date of completion of the search | Examiner |
|---|---|---|
| The Hague | 29 November 2023 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

## ANNEX TO THE EUROPEAN SEARCH REPORT
## ON EUROPEAN PATENT APPLICATION NO.

EP 23 18 6430

29-11-2023

| Patent document cited in search report | | Publication date | Patent family member(s) | | | Publication date |
|---|---|---|---|---|---|---|
| US 11177740 | B1 | 16-11-2021 | TW | 202211600 | A | 16-03-2022 |
| | | | US | 11177740 | B1 | 16-11-2021 |
| EP 2717449 | B1 | 14-12-2016 | CN | 103715901 | A | 09-04-2014 |
| | | | EP | 2717449 | A1 | 09-04-2014 |
| | | | US | 2014098579 | A1 | 10-04-2014 |
| US 2011228569 | A1 | 22-09-2011 | CN | 102239628 | A | 09-11-2011 |
| | | | US | 2011228569 | A1 | 22-09-2011 |
| | | | WO | 2010063139 | A1 | 10-06-2010 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63391099